# EUROPÄISCHE PATENTSCHRIFT

(11) **EP 0 554 784 B1**
(45) Veröffentlichungstag und Bekanntmachung des Hinweises auf die Patenterteilung: **10.09.1997**
(21) Anmeldenummer: 93101248.8
(22) Anmeldetag: 28.01.1993
(51) Int. Cl.: C08J 3/03, C08G 18/79, C08G 18/08, C08G 18/38, C08F 299/06, C09D 175/14

(54) **Strahlungshärtbare, wässrige Polyurethandispersionen**
Radiation-curable aqueous polyurethane dispersions
Dispersions aqueuses de polyuréthane durcissables par irradiation

(30) Priorität: 07.02.1992 DE 4203546
(43) Veröffentlichungstag der Anmeldung: 11.08.1993
(73) Patentinhaber: BASF Aktiengesellschaft, 67063 Ludwigshafen (DE)
(72) Erfinder: Jaeger, Ulrich, Dr., W-6721 Harthausen (DE); Beck, Erich, Dr., W-6721 Harthausen (DE); Reich, Wolfgang, Dr., W-6701 Maxdorf (DE); Bronstert, Bernd, Dr., W-6701 Otterstadt (DE); Huemmer, Wolfgang, Dr., W-6701 Birkenheide (DE)

(56) Entgegenhaltungen:
- EP-A- 0 026 313
- EP-A- 0 033 898
- EP-A- 0 085 722
- EP-A- 0 236 201
- CH-A- 488 769
- Kunststoff-Handbuch 7, "Polyurethane", 2. Aufl., Hanser Verlag, 1983, S. 24,25,79,83,84

## Beschreibung

Die Erfindung betrifft eine wäßrige Dispersion eines strahlungshärtbaren Polyurethans, welches als Aufbaukomponenten Isocyanuratgruppen oder Biuretgruppen aufweisende Polyisocyanate, Polyole, welche durch Umsetzung von durch mindestens eine Sulfonsäure - oder Sufonatgruppe substituierten, aromatischen Dicarbonsäuren mit Polyolen im Molverhältnis 1:2 bis 1:1,01 erhältlich sind, und eine zur Härtung ausreichende Menge ethylenisch ungesättigter Gruppen in einer weiteren Aufbaukomponente enthält, wobei die Anteile der Aufbaukomponenten des Polyurethans so gewählt sind, daß auf ein Äquivalent Isocyanat 0,8 bis 1,2 Äquivalente mit Isocyanat reaktiver Gruppen entfallen.

Strahlungshärtbare Beschichtungsmittel haben generell den Vorteil, daß die Aushärung zu einem gewünschten Zeitpunkt in sehr kurzer Zeit erfolgen kann. Als Beschichtungsmittel haben sich insbesondere auch wäßrige Polyurethandispersionen als geeignet erwiesen.

Solche strahlungshärtbaren, wäßrigen Polyurethandispersionen sind z.B. aus der DE-A-29 36 039 bekannt. Die dort beschriebenen Polyurethane sind selbstdispergierbar und enthalten dazu als Aufbaukomponente eine Aminosulfonsäure. Auch in der DE-A-34 37 918 werden strahlungshärtbare Polyurethane beschrieben. Es wird darauf verwiesen, daß Triisocyanate bei der Herstellung der Polyurethane als Molekulargewichtsregler mitverwendet werden können.

Aus der EP-A-377 297 ist das Umsetzungsprodukt von Sulfoisophthalsäure mit Diolen als dispergieraktive Aufbaukomponente für nicht strahlungshärtbare Polyurethane bekannt.

Aus EP-A 85722 sind Polyurethane bekannt, welche Sulfonatgruppen und Doppelbindungen enthalten. Die Sulfonatgruppen dienen zur Dispergierung magnetischer Teilchen.

An Beschichtungsmittel werden generell eine Vielzahl von unterschiedlichen, teilweise auch gegenläufigen Anforderungen gestellt.

So sollen die Beschichtungsmittel einerseits in möglichst kurzer Zeit härtbar sein, andererseits sollen die erhaltenen Beschichtungen aber auch hohe Anforderungen hinsichtlich ihrer Härte, Flexibilität, Haftung und Widerstand gegen Rißbildung erfüllen.

Die bisher bekannten, strahlungshärtbaren Polyurethandispersionen erfüllen diese Anforderungen noch nicht in ausreichendem Maße.

Aufgabe der vorliegenden Erfindung waren daher strahlungshärtbare, wäßrige Polyurethansysteme, welche alle oben genannten Anforderungen möglichst gut erfüllen.

Demgemäß wurden die oben definierten wäßrigen Dispersionen sowie ihre Verwendung zur Herstellung von Beschichtungsmitteln und Formkörpern gefunden.

Bei den Isocyanuratgruppen aufweisenden Polyisocyanaten handelt es sich um Trimerisierungsprodukte von Polyisocyanaten, insbesondere von Diisocyanaten.

Geeignet sind z.B. Isocyanuratgruppen aufweisende Polyisocyanate auf Basis von aliphatischen, bzw. cycloaliphatischen, Diisocyanaten, vorzugsweise solchen auf Basis von C₁-C₁₂-, insbesondere C₂-C₈-Alkylendiisocyanaten, wie Hexamethylendiisocyanat oder von C₅-C₁₈, insbesondere C₆-C₁₆-Cycloalkylendiisocyanaten, insbesondere Isophorondiisocyanat oder auf Basis von aromatischen Diisocyanaten, insbesondere solchen von C₅-C₁₉-, vorzugsweise C₆-C₁₆-Arylen bzw. diisocyanaten, wie Phenylen-1,4-, Toluylen-2,4-, Toluylen-2,6-, Diphenyl-4,4'-, Diphenylmethan-4,4' oder Naphthalin-1,5-diisocyanat.

Mit aromatischen, Isocyanuratgruppen aufweisenden Polyisocyanaten können besonders große Härten, z.B. von Beschichtungen erzielt werden. Polyurethane mitentsprechenden aliphatischer bzw. cycloaliphatischen Polyisocyanaten können dagegen aufgrund ihrer im allgemeinen geringen Lösungsviskosität im Vergleich zu solchen auf Basis von aromatischen Verbindungen weniger Lösungsmittel zur Einstellung der Verarbeitungsviskosität erforderlich machen.

Besonders bevorzugt sind daher Isocyanuratgruppen aufweisende Polyisocyanate, welche aus einem Gemisch aus insgesamt 10 bis 90 mol-%, besonders bevorzugt 30 bis 70 mol-% eines aliphatischen, bzw. cycloaliphatischen Diisocyanats, insbesondere eines C₂-C₈-Alkylendiisocyanats, und 10 bis 90 mol-%, besonders bevorzugt 30 bis 70 mol-% eines aromatischen Diisocyanats, insbesondere eines C₆-C₁₆-Arylen bzw. Alkarylendiisocyants aufgebaut sind.

Die Trimerisierung von Polyisocyanaten, insbesondere Diisocyanaten, kann in dem Fachmann bekannter Weise bei erhöhter Temperatur, insbesondere bei 50 bis 150°C, gegebenenfalls unter Zusatz eines Katalysators, z.B. Trialkylphosphinen, wie Tributylphosphin, oder z.B. Trimethylbenzylammoniumhydroxid durchgeführt werden, wie es z.B. in der Encyclopedia of Chem. Technology, Bd. 13, Seite 794 (1978) beschrieben ist.

Bei der Trimerisierungsreaktion entstehen neben Polyisocyanaten mit einer Isocyanuratgruppe, z.B. Tri-isocyanato-isocyanuraten als Trimere aus 3 Molekülen Diisocyanat, auch solche mit mehreren Isocyanuratgruppen.

Bevorzugt enthalten die Isocyanuratgruppen aufweisenden Polyisocyanate mindestens 50 Gew.-%, besonders bevorzugt mindestens 70 Gew.-% Polyisocyanate mit nur einer Isocyanuratgruppe.

Biuretgruppen aufweisende Polyisocyanate können in bekannter Weise durch Umsetzung von primäre Aminogruppen enthaltenden Verbindungen mit Polyisocyanaten, insbesondere Diisocyanaten, erhalten werden, wie es z.B. in der DE-A-26 09 995 beschrieben ist. Als Aminogruppen enthaltende Verbindungen sind insbesondere auch Umsetzungsprodukte der Polyisocyanate selbst mit protischen Verbindungen, insbesondere auch Wasser geeignet.

Die Biuretgruppen aufweisenden Polyisocyanate enthalten vorzugsweise 1 bis 3, besonders bevorzugt 1 Biuretgruppe.

Über die für die Biuretbildung eingesetzten Polyisocyanate, vorzugsweise Diisocyanate, gilt das voranstehend über die Herstellung der Isocyanuratgruppen enthaltenden Polyisocyanate gesagte.

Das mittlere Molekulargewicht der Isocyanuratgruppen oder Biuretgruppen aufweisenden Polyisocyanaten liegt bevorzugt zwischen 300 und 3000, besonders bevorzugt zwischen 300 und 1000 g/mol.

Bevorzugt sind Isocyanuratgruppen aufweisende Polyisocyanate.

Neben Isocyanuratgruppen oder Biuretgruppen enthaltenden Polyisocyanaten kommen weitere Polyisocyanate als Aufbaukomponenten in Betracht. Vorzugsweise handelt es sich dabei um die vorstehend genannten Diisocyanate.

Insgesamt bestehen die zum Aufbau des Polyurethans eingesetzten Polyisocyanate

| | |
|---|---|
| vorzugsweise zu | 10 Gew.-% bis 100 Gew.-% |
| besonders bevorzugt zu | 20 Gew.-% bis 60 Gew.-% |

aus Isocyanuratgruppen oder Biuretgruppen enthaltenden Polyisocyanaten.

Die erfindungsgemäß verwendeten Polyole als Aufbaukomponente sind erhältlich durch Veresterung von aromatischen Dicarbonsäuren, welche mindestens eine Sulfonsäure- oder Sulfonatgruppe enthalten, mit Polyolen im Molverhältnis 1:2 bis 1:1,01.

In Betracht kommen z.B. durch eine Sulfonsäure- oder Sulfonatgruppe substituierte Dicarbonsäuren, welche sich von aromatischen Verbindungen, insbesondere aromatische Verbindungen mit 5 bis 10 C-Atomen ableiten.

Genannt sei z.B. die 5-Sulfoisophthalsäure.

Als Polyole für die Veresterung können vorzugsweise Diole mit einem Molekulargewicht über 50 bis 6000 g/mol eingesetzt werden. In Betracht kommen z.B. Alkandiole, wie Butandiol, Hexandiol oder Polyester, Polyether, Polythioether, Polylactone, Polyacetale, Polycarbonate oder Polyesteramide mit 2 Hydroxylgruppen.

Bei den Polyesterdiolen handelt es sich insbesondere um die an sich bekannten Umsetzungsprodukte von zweiwertigen Alkoholen mit zweiwertigen Carbonsäuren. Anstelle der freien Polycarbonsäuren können auch die entsprechenden Polycarbonsäureanhydride oder entsprechende Polycarbonsäureester von deren Alkoholen oder deren Gemische zur Herstellung der Polyesterpolyole verwendet werden. Die Polycarbonsäuren können aliphtisch, cycloaliphatisch, aromatisch oder heterocyclisch sein und gegebenenfalls, z.B. durch Halogenatome, substituiert und/oder ungesättigt sein. Als Beispiele hierfür seien genannt: Bernsteinsäure, Adipinsäure, Korksäure, Azelainsäure, Sebacinsäure, Phthalsäure, Isophthalsäure, Phthalsäureanhydrid, Tetrahydrophthalsäureanhydrid, Hexahydrophthalsäureanhydrid, Tetrachlorphthalsäureanhydrid, tetrahydrophthalsäureanhydrid, Glutarsäureanhydrid, Maleinsäure, Maleinsäureanhydrid, Fumarsäure, dimere Fettsäuren. Als mehrwertige Alkohole kommen z.B. Ethylenglykol, Propylenglykol-(1,2) und -(1,3), Butandiol-(1,4), -(1,3), Butendiol-(1,4), Butindiol-(1,4), Pentandiol-(1,5), Hexandiol-(1,6), Octandiol-(1,8), Neopentylglykol, Cyclohexandimethanol (1,4-Bis-hydroxymethylcyclohexan), 2-Methyl-1,3-propandiol, Pentandiol-(1,5), ferner Diethylenglykol, Triethylenglykol, Tetraethylenglykol, Polyethylenglykol, Dipropylenglykol, Polypropylenglykol, Dibutylenglykol und Polybutylenglykole in Frage.

Geeignet sind auch Polyesterdiole auf Lacton-Basis, wobei es sich um Homo- oder Mischpolymerisate von Lactonen, bevorzugt um endständige Hydroxylgruppen aufweisende Anlagerungsprodukte von Lactonen bzw. Lactongemischen, wie z.B. ε-Caprolacton, β-Propiolacton, ν-Butyrolacton und/oder Methyl-ε-caprolacton an geeignete difunktionelle Startermoleküle, z.B. die vorstehend als Aufbaukomponente für die Polyesterpolyole genannten niedermolekularen, zweiwertigen Alkohole handelt. Die entsprechenden Polymerisate des ε-Caprolactons sind besonders bevorzugt. Auch niedere Polyesterdiole oder etherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren eingesetzt werden.

Die - gegebenenfalls auch im Gemisch mit Polyesterdiolen - einsetzbaren Polyetherdiole, sind insbesondere durch Polymerisation von Ethylenoxid, Propylenoxid, Butylenoxid, Tetrahydrofuran, Styroloxid oder Epichlorhydrin mit sich selbst, z.B. in Gegenwart von BF₃ oder durch Anlagerung dieser Verbindungen gegebenenfalls im Gemisch oder nacheinander, an Startkomponenten mit reaktionsfähigen Wasserstoffatomen, wie Alkohole oder Amine, z.B. Wasser, Ethylenglykol, Propylenglykol-(1,3) oder -(1,2), 4,4'-Dihydroxy-diphenylpropan, Anilin erhältlich.

Besonders bevorzugt werden bei der Umsetzung mit der aromatischen, durch Sulfonsäure - oder Sulfonatgruppen substituierten Dicarbonsäure aliphatische C₃- bis C₈-Diole eingesetzt.

Die Umsetzung, d.h. Veresterung, wird vorzugsweise bei Temperaturen zwischen 140 und 220°C gegebenenfalls in Gegenwart von z.B. p-Toluolsulfonsäure oder Dibutylzinnoxid als Katalysator durchgeführt.

Als weitere mögliche Aufbaukomponenten des Polyurethans seien Polyole mit einem Molekulargewicht über 500 bis 6000 g/mol, vorzugsweise zwischen 800 und 4000 g/mol genannt, welche keine Ionengruppen oder in ionische Gruppen überführbare Gruppen enthalten. Insbesondere handelt es sich bei diesen weiteren Polyolen um die vorangehend aufgeführten Polyester- und Polyetherdiole.

Der Gewichtsanteil der erfindungsgemäß als Aufbaukomponente eingesetzten Sulfonsäure- bzw. Sulfonatgruppen enthaltenden Polyole beträgt an den insgesamt eingesetzten Polyole vorzugsweise 1 bis 100 Gew.-%, besonders bevorzugt 10 bis 60 Gew.-%.

Ebenso werden als Aufbaukomponenten üblicherweise Verbindungen mit mindestens zwei gegenüber Isocyanat reaktiven Gruppen, wobei es sich um Hydroxylgruppen, primäre oder sekundäre Aminogruppen handelt, und einem Molekulargewicht zwischen 60 und 500 g/mol eingesetzt. Diese Verbindungen dienen als Kettenverlängerer oder auch bei mehr als 2 gegenüber Isocyanat reaktiven Gruppen als Vernetzer.

Beispielsweise genannt seien Verbindungen, welche zwei Hydroxylgruppen, zwei primäre oder sekundäre Aminogruppen oder eine Hydroxyl- und eine primäre oder sekundäre Aminogruppe enthalten. In Betracht kommen z.B. Dihydroxylverbindungen, wie Propandiol-(1,3), Butandiol-(1,4), Diamine wie Ethylendiamin, Hexamethylendiamin, Piperazin, 2,5-Dimethylpiperazin, 1-Amino-3-amino-methyl-3,5,5-trimethyl-cyclohexan (Isophorondiamin), 4,4'-Diaminodicyclohexylmethan, 2,4-Diaminocyclohexan, 1,2-Diamino-propan, Hydrazin oder Aminoalkohole wie Ethanolamin, Isopropanolamin, Methylethanolamin oder Aminoethoxyethanol.

Durch die erfindungsgemäß eingesetzten Sulfonsäure- bzw. Sulfonatgruppen enthaltenden Polyole wird eine Dispergierbarkeit in Wasser bewirkt. Darüber hinaus können noch weitere Aufbaukomponenten eingesetzt werden, welche eine Dispergierfähigkeit des Polyurethans in Wasser bewirken.

Dabei kann es sich sowohl um nichtionische oder anionische Emulgatoren handeln.

Als nichtionische Emulgatoren sind einwertige Polyetheralkohole des Molgewichtsbereiches 500 bis 10 000 g/mol, vorzugsweise von 1 000 bis 5 000 g/mol bevorzugt. Einwertige etheralkohole sind durch Alkoxylierung von einwertigen Startermolekülen,wie beispielsweise Methanol, Ethanol oder n-Butanol erhältlich, wobei als Alkoxylierungsmittel Ethylenoxid oder Gemische von Ethylenoxid mit anderen Alkylenoxiden, besonders Propylenoxid eingesetzt werden. Im Falle der Verwendung von Alkylenoxidgemischen enthalten diese jedoch vorzugsweise mindestens 40, besonders bevorzugt mindestens 65 mol-% Ethylenoxid.

Als anionische Emulgatoren kommen im allgemeinen Verbindungen mit einer Carbonsäure-, bzw. Carboxylatgruppe oder einer Sulfonsäure bzw. Sulfonatgruppe und mindestens einer Hydroxylgruppe oder einer primären oder sekundären Aminogruppe in Betracht.

Erwähnenswert sind z.B. Aminocarbonsäuren oder Aminosulfonsäuren z.B. Lysin, β-Alanin, N-(2-Aminoethyl)-2-aminoethansulfonsäure und die in der DE-A-20 34 479 genannten Addukte von aliphatischen diprimären Diaminen an α-olefinische Carbonsäuren, z.B. das Addukt von Ethylendiamin an Acrylsäure, sowie Mono- oder Dihydroxycarbonsäuren, insbesondere Dihydroxyalkylcarbonsäuren mit 3 bis 10 C-Atomen, wie sie auch in der US-A-34 12 054 beschrieben sind. Beispielsweise genannt sei 2,2-Dimethylolpropionsäure.

Weitere Aufbaukomponenten des Polyurethans sind Verbindungen mit ethylenisch ungesättigten Gruppen, welche für die Strahlungshärtung notwendig sind.

Zu nennen sind z.B. Ester von Acryl- oder Methacrylsäure mit Polyolen in Frage, wobei mindestens eine OH-Gruppe des Polyols unverestert bleibt. Besonders geeignet sind Hydroxyalkyl(meth)acrylate HO(CH₂)ₙOOC(R¹) C = CH₂ (n = 2 bis 8; R¹ = H, CH₃) und ihre Stellungsisomeren, Mono(meth)acrylsäureester von Polyetherdiolen HO(CHR²CHR³O)ₘOC(R¹) C = CH₂ (R¹ = H, CH₃; R² = H, CH₃; R³=H, CH₃, C₂H₅; m = 2 bis 20), oder Reaktionsprodukte von Epoxidverbindungen z.B. dem Bisglycidylether von Bisphenol A mit (Meth)acrylsäure. Verbindungen mit mehr als einer ungesättigten Gruppe sind z.B. Trimethylolpropandi(meth)acrylat und Pentaerythritdi- oder tri(meth)acrylat.

Der Gehalt an ethylenisch ungesättigten Gruppen im Polyurethan beträgt vorzugsweise 0,05 - 6,0, besonders bevorzugt 0,1 - 3,0 mol Doppelbindungen pro kg Polyurethan.

Insgesamt werden die Anteile der Aufbaukomponenten des strahlungshärtbaren Polyurethans so gewählt, daß auf ein Äquivalent Isocyanat 0,8 bis 1,2, bevorzugt 0,9 bis 1,1 besonders bevorzugt ca. 1 Äquivalent mit Isocyanat reaktiver Gruppen, d.h. primärer und sekundärer Aminogruppen und Hydroxylgruppen entfallen.

Die Herstellung des Polyurethans kann nach üblichen Methoden, wie sie z.B. in der DE-A-34 37 918 beschrieben sind, erfolgen.

Bevorzugt werden die Komponenten in einem inerten, mit Wasser mischbaren Lösungsmittel, wie Aceton, Tetrahydrofuran, Methylethylketon oder N-Methylpyrrolidon oder besonders bevorzugt lösungsmittelfrei in der Schmelze umgesetzt. Die Reaktionstemperatur liegt vorzugsweise bei 50 bis 100°C.

Zur Beschleunigung der Reaktion der Polyisocyanate können die üblichen und bekannten Katalysatoren, wie Dibutylzinndilaurat, Zinn-II-octoat oder 1,4-Diazabicyclo-(2,2,2)-octan, mitverwendet sein.

Um eine unerwünschte, vorzeitige Polymerisation der ungesättigten Gruppen zu vermeiden, werden vorteilhafterweise bereits bei der Herstellung des Polyurethans Polymerisationsinhibitoren zugesetzt. Hierfür sind beispielsweise Chinone, Phenothiazin, Phenole oder Phenolderivate, wie p-Benzochinon, Hydrochinon, p-Methoxyphenol u.a. Verbindungen geeignet, wie sie z.B. beschrieben sind in "Encyclopedia of Polymer Science and Technology", Vol. 7, 1967, p. 644-664 Editors: Mark, Gaylord und Bikales, Interscience Publishers, Wiley + Sons, New York-London-Sydney.

Das erhaltene strahlungshärtbare Polyurethan wird in Wasser dispergiert. Im Polyurethan vorliegende Sulfonsäure- und gegebenenfalls Carbonsäuregruppen werden geeigneterweise vor oder während der Dispergierung durch Zusatz von anorganischen und/oder organischen Basen wie Natriumhydroxid, Kaliumhydroxid, Kaliumcarbonat, Natriumhydrogencarbonat, Ammoniak oder primären, sekundären und besonders tertiären Aminen, z.B. Triethylamin oder Dimethylaminopropanol neutralsiert.

Anschließend wird das organische Lösungsmittel, soweit vorhanden, im gewünschten Ausmaß, im allgemeinen vollständig, entfernt.

Der Gewichtsanteil des Wassers in der Dispersion wird allgemein so bemessen, daß wäßrige Polyurethan-Dispersionen mit 10 bis 60 Gew.-%, vorzugsweise mit 20 bis 50 Gew.-% Feststoffgehalt erhalten werden.

Die erfindungsgemäßen Dispersionen können weitere Zusätze, z.B. Pigmente, Farbstoffe, Füllstoffe und in der Lacktechnologie übliche Hilfsmittel enthalten.

Zur Stahlungshärtung durch UV-Licht werden den Dispersionen Photoinitiatoren zugesetzt.

Als Photoiniatoren in Betracht kommen z.B. Benzophenon, Alkylbenzophenone, halogenmethylierte Benzophenone, Michlers Keton, Anthron und halogenierte Benzophenone. Ferner eignen sich Benzoin und seine Derivate. Ebenfalls wirksame Photoinitiatoren sind Anthrachinon und zahlreiche seiner Derivate, beispielsweise β-Methylanthrachinon, tert.-Butylanthrachinon und Anthrachinoncarbonsäureester und Acylphoshinoxide, z.B. 2,4,6 Trimethylbenzoyldiphenylphosphinoxid (Lucirin® TPO). Die Photoinitiatoren können auch an das Polymergerüst gebunden sein, z.B. durch Copolymerisation von mit Methacrylatgruppen funktionalisierten Photoinitiatoren.

Die Photoinitiatoren, die je nach Verwendungszweck der erfindungsgemäßen Massen im allgemeinen in Mengen zwischen 0,05 und 20 Gew.-%, vorzugsweise, 0,05 bis 5 Gew.-%, bezogen auf das Polyurethan, eingesetzt werden, können als einzelne Substanz oder, wegen häufiger vorteilhafter synergistischer Effekte, auch in Kombination miteinander verwendet werden.

Vorteilhafte Zusätze, die zu einer weiteren Steigerung der Reaktivität führen können, sind tert. Amine wie z.B. Triethylamin und Triethanolamin. Auch sie werden im allgemeinen in Mengen bis zu 5 Gew.-%, bezogen auf das Polyurethan, eingesetzt.

Zu erwähnen ist noch, daß die erfindungsgemäßen Dispersionen auch thermisch vernetzt werden können, wenn sie Initiatoren, die bei erhöhten Temperaturen Radikale bilden, enthalten. Verwendbar sind z.B. Dibenzoylperoxid, Cumolhydroperoxid oder Azodiisobuttersäuredinitril. Weitere Beispiele für geeignete Initiatoren sind in "Polymer Handbook", 2. Auflage, Wiley & Sons, New York, beschrieben.

Die erfindungsgemäßen Dispersionen können für die Herstellung von Beschichtungen und Formkörpern verwendet werden.

Sie können z.B. durch Spritzen, Gießen, Drucken oder Rakeln auf Substrate wie Metall, Kunststoff, Glas, Holz, Papier, Pappe, Leder oder Textil aufgebracht werden.

Bei der Strahlungshärtung werden die Überzüge im allgemeinen bis zu 30 min bei Temperaturen bis 100°C vorgeheizt und anschließend kurzzeitig einer UV- oder energiereichen Elektronenstrahlung ausgesetzt. Hierzu werden die üblicherweise für die Härtung von Überzügen eingesetzten UV- bzw. Elektronenstrahlungsquellen verwendet.

Bei porösen Substraten, wie beispielsweise Leder, Papier, Holz, sind nur sehr kurze Vorheizzeiten erforderlich, da die Hauptmenge des Wassers vom Untergrund aufgenommen wird; bisweilen kann auf ein Vorheizen ganz verzichtet werden.

Die erfindungsgemäßen Dispersionen besitzen eine hohe Reaktivität (kurze Härtungszeiten).

Die erhaltenen Beschichtungen weisen gleichzeitig bei sehr guten elastischen Eigenschaften (Widerstand gegen Rißbildung) eine große Härte auf.

### Beispiele

Gew.-Teile sind Gramm

### Herstellung des sulfonatgruppenhaltigen Polyols

### Beispiel 1

In einem Reaktionsgefäß wurden 472 Gew.-Teile 1,6-Hexandiol (4 mol), 268,5 Gew.-Teile 5-Sulfoisophthalsäure-Natriumsalz (1 mol) sowie 1,1 Gew.-Teile Dibutylzinnoxid vorgelegt. Diese Mischung wurde auf eine Temperatur von 180°C erhitzt, wobei das gebildete Wasser abdestillierte. Die Reaktion wurde beendet, nachdem die Säurezahl nahezu auf null abgefallen war und die 5-Sulfoisophthalsäure (1 mol) mit 2 mol Hexandiol verestert war. Das entstandene Wasser wurde zusammen mit einem Teil des überschüssigen Hexandiol abdestilliert. Das erhaltene Gemisch enthielt 12 Gew.-% (35 mol-%) Hexandiol und 88 Gew.-% (65 mol-%) des Sulfoisophthalsäurediesters.
Säurezahl: 3,4 mg KOH/g Substanz
OH-Zahl: 324 mg KOH/g Substanz

### Herstellung von Polyurethandispersionen

### Beispiel 2

117,5 Gew.-Teile (0,47 Äquivalente) eines Polyesterdiols aus Adipinsäure und Neopentylglykol, 91,7 Gew.-Teile (0,53 Äquivalente) des Gemisches aus Beispiel 1 sowie 110,3 Gew.-Teile (0,95 Äquivalente) Hydroxyethylacrylat wurden mit einer Mischung aus 155,4 Gew.-Teilen (1,4 Äauivalente) Isophorondiisocyanat und 118,3 Gew.-Teilen (0,6 Äquivalente) eines durch Trimerisierung von Hexamethylendiisocyanat erhaltenen Polyisocyanats bei 100°C umgesetzt. Zur Stabilisierung wurden 0,9 Teile Hydrochinonmonomethylether zugesetzt. Nach Ende der Reaktion wurden 594 Teile Wasser zugesetzt.
Viskosität: 158 mPa*s
Teilchengröße: 226 nm

### Beispiel 3

100 Gew.-Teile (0,4 Äquivalente) eines Polyesterdiols aus Adipinsäure und Neopentylglykol, 103,8 Gew.-Teile (0,6 Äquivalente) des Gemisches aus Beispiel 1 sowie 110,3 Gew.-Teile (0,95 Äquivalente) Hydroxyethylacrylat wurden mit einer Mischung aus 121 Gew.-Teilen (1,4 Äquivalente) Gemisches aus Toluylendiisocyanat und 118,3 Gew.-Teilen (0,6 Äquivalente) eines durch Trimerisierung von Hexamethylendiisocyanat erhaltenen Polyisocyanats bei 100°C umgesetzt. Zur Stabilisierung wurden 0,9 Teile Hydrochinonmonomethylether zugesetzt. Nach Ende der Reaktion wurden 553 Teile Wasser zugesetzt.
Viskosität: 868 mPa*s
Teilchengröße: 83 nm

### Beispiel 4 (zum Vergleich)

125 Gew.-Teile (0,5 Äquivalente) eines Polyesterdiols aus Adipinsäure und Neopentylglykol, 86,5 Gew.-Teile (0,5 Äquivalente) des Gemischs aus Beispiel 1 sowie 115 Gew.-Teile (0,99 Äquivalente) Hydroxyethylacrylat wurden mit 222 Gew.-Teilen (2,0 Äquivalente) Isophorondiisocyanat bei 100°C umgesetzt. Zur Stabilisierung wurden 0,9 Teile Hydrochinonmonomethylether zugesetzt. Nach Ende der Reaktion wurden 548 Teile Wasser zugefahren.
Viskosität: 64 mPa*s
Teilchengröße: 138 nm

### Beispiel 5 (zum Vergleich)

In diesem Beispiel wurde, wie in DE-A 2 936 039, statt der Sulfonatdiole auf Basis 5-Sulfoisophthalsäure-Na-Salz ein Diaminosulfonsäure-Na-Salz als dispergieraktive Komponente eingesetzt. Alle anderen Komponenten wurden beibehalten.

Zu einer Vorlage von 155,4 Gew.-Teilen (1,4 Äquivalente) Isophorondiisocyanat und 118,3 Gew.-Teilen (0,6 Äquivalente) eines durch Trimerisierung von Hexamethylendiisocyanats erhaltenen Isocyanurats sowie 0,81 Gew.-Teilen 2,6-Di-tert.-butyl-4-methylphenol und 0,43 Gew.-Teilen Hydrochinonmonomethylether wurden bei 60°C 110,3 GEw.-Teile (0,95 Äquivalente) Hydroxyethylacrylat, 100 Gew.-Teile (0,4 Äquivalente) eines aus Adipinsäure und Neopentylglykol hergestellten Polyesters, und 20,6 Gew.-Teile (0,35 Äquivalente) Hexandiol zugegeben. Nachdem der NCO-Gehalt auf 1,85 % abgesunken war, wurden 232 Gew.-Teile Aceton und 23,7 Gew.-Teile (0,25 Äquivalente) 2-(2-Aminoethyl)-aminoethansulfonsäure-Na-salz zugegeben. Bei einem NCO-Gehalt von 0 % wurden 528 Teile Wasser zugegeben und das Aceton abdestilliert. Es resultierte eine 50%ige wäßrige Dispersion.
Viskosität: 7 mPa*s
Teilchengröße: 362 nm

### Anwendungstechnische Prüfung

### Reaktivitätsprüfung

Ein 30 µm dicker Lackfilm wurde auf eine Glasplatte aufgezogen und mit einer UV-Lampe der Leistung 120 W/cm bestrahlt. Gemessen wurde die Geschwindigkeit, mit der die Probe unter der Lampe durchgefahren werden mußte bis die Oberfläche klebfrei war.

### Erichsentiefung

Es wurde ein 100 µm dicker Lackfilm, auf ein Aluminumblech Bonder 132 aufgezogen und mit der oben genannten Lampe zweimal mit einer Geschwindigkeit des Transportbandes von 12 m/min bestrahlt. Die Prüfung selbst erfolgte nach DIN ISO 1520.

Die Angabe in mm (siehe Tabelle) gibt an, wie weit eine Stahlkugel in die Blechrückseite gedrückt werden Kann, bis der Lackfilm reißt.

### Pendelhärte

Es wurde ein 200 µm dicker Lackfilm auf eine Glasplatte aufgezogen und wie oben bestrahlt. Die Prüfung wurde nach DIN 53157 durchgeführt.

Die Angbe in Sekunden (s) (Tabelle) gibt an, nach welcher Zeit ein auf die Lackoberfläche aufgesetztes Pendel zum Stehen kommt.

**Tabelle**

| Beispiel-Nr. | Reaktivität (m/min) | Pendelhärte (s) | Erichsentiefung (mm) |
|---|---|---|---|
| 2 | 15 | 162 | 9,3 |
| 3 | 20 | 139 | 8,1 |
| 4 | 5 | 147 | 7,6 |
| 5 | 10 | 107 | 2,3 |

## Patentansprüche

1. Wäßrige Dispersion eines strahlungshärtbaren Polyurethans, welches als Aufbaukomponenten Isocyanuratgruppen oder Biuretgruppen aufweisende Polyisocyanate, Polyole, welche durch Umsetzung von durch mindestens eine Sulfonsäure- oder Sulfonatgruppe substituierten, aromatischen Dicarbonsäuren mit Polyolen im Molverhältnis 1:2 bis 1:1,01 erhältlich sind, und eine zur Härtung ausreichende Menge ethylenisch ungesättigter Gruppen in einer weiteren Aufbaukomponente enthält, wobei die Anteile der Aufbaukomponenten des Polyurethans so gewählt sind, daß auf ein Äquivalent Isocyanat 0,8 bis 1,2 Äquivalente mit Isocyanat reaktiver Gruppen entfallen.

2. Verwendung einer wäßrigen Dispersion gemäß Anspruch 1 zur Herstellung von Beschichtungen.

3. Verwendung einer wäßrigen Dispersion gemäß Anspruch 1 zur Herstellung von Formkörpern.

4. Beschichtete Substrate, erhältlich unter Verwendung einer Dispersion gemäß Anspruch 1.

5. Formkörper, erhältlich unter Verwendung einer Dispersion gemäß Anspruch 1.

## Claims

1. An aqueous dispersion of a radiation-curable polyurethane which contains, as formative components, polyisocyanates containing isocyanurate groups or biuret groups, polyols obtainable by reacting aromatic dicarboxylic acids which are substituted by at least one sulfonyl or sulfonate group with polyols in a molar ratio of from 1:2 to 1:1.01, and a quantity, sufficient for curing, of ethylenically unsaturated groups in a further formative component, the contents of the formative components of the polyurethane being selected so that from 0.8 to 1.2 equivalents of isocyanate-reactive groups are present per equivalent of isocyanate.

2. The use of an aqueous dispersion as claimed in claim 1 for the production of coatings.

3. The use of an aqueous dispersion as claimed in claim 1 for the production of moldings.

4. A coated substrate obtainable using a dispersion as claimed in claim 1.

5. A molding obtainable using a dispersion as claimed in claim 1.

## Revendications

1. Dispersion aqueuse d'un polyuréthanne durcissable par irradiation, qui contient, en tant que constituants, des polyisocyanates comportant des groupements isocyanurate ou biuret, des polyols, qu'on peut obtenir par réaction de polyols avec des acides dicarboxyliques aromatiques substitués par au moins un groupement sulfonate ou acide sulfonique dans un rapport en moles de 1:2 à 1:1,01, et un autre constituant contenant des groupements à insaturation éthylénique en quantité suffisante pour obtenir le durcissement, les proportions des constituants du polyuréthanne étant choisies afin que l'on ait 0,8 à 1,2 équivalents en groupements réagissant avec les isocyanates, pour 1 équivalent d'isocyanate.

2. Utilisation d'une dispersion aqueuse selon la revendication 1, pour la fabrication de revêtements.

3. Utilisation d'une dispersion aqueuse selon la revendication 1, pour la fabrication de corps moulés.

4. Substrats revêtus obtenus par utilisation d'une dispersion selon la revendication 1.

5. Corps moulés obtenus par utilisation d'une dispersion selon la revendication 1.
